# EUROPEAN PATENT SPECIFICATION

(11) **EP 3 398 343 B1**
(45) Date of publication and mention of the grant of the patent: **27.01.2021**
(21) Application number: 16819505.5
(22) Date of filing: 15.12.2016
(51) Int. Cl.: H04N 21/434, H04N 21/418, H04N 21/462, H04N 21/61

(54) **OTT CHANNEL LIST RETENTION**
BEIBEHALTUNG EINER OVER-THE-TOPKANALLISTE
RÉTENTION D'UNE LISTE DE CANAUX « OVER THE TOP »

(30) Priority: 31.12.2015 GB 201523161; 22.02.2016 GB 201603015
(43) Date of publication of application: 07.11.2018
(73) Proprietor: SMARDTV SA, 1033 Cheseaux-sur-Lausanne (CH)
(72) Inventor: HEDHLI, Saber, 1033 Cheseaux-sur-Lausanne (CH); BELLOCCHIO, Marc, 1033 Cheseaux-sur-Lausanne (CH)
(74) Representative: Hoyng Rokh Monegier LLP
(86) International application number: PCT/EP2016/081249
(87) International publication number: WO 2017/114664

(56) References cited:
- EP-A1- 1 337 112
- EP-A1- 2 665 282
- DVB ORGANIZATION: "TM-CI-PLUS0416_TM-CI-PLUS0238r29_rc2.docx ", DVB, DIGITAL VIDEO BROADCASTING, C/O EBU - 17A ANCIENNE ROUTE - CH-1218 GRAND SACONNEX, GENEVA - SWITZERLAND, 6 October 2015 (2015-10-06), XP017846455,
- "Digital Video Broadcasting (DVB); Guidelines on implementation and usage of Service Information (SI);ETSI TS 101 211", ETSI DRAFT; ETSI TS 101 211, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. Broadcast, no. V1.12.1, 19 July 2013 (2013-07-19), pages 1-60, XP014196489, [retrieved on 2013-07-19]

## Description

This disclosure relates to retaining a broadcast channel list when over the top content is viewed. It is particularly suitable for, but by no means limited to, retaining a DVB terrestrial broadcast channel list when on-demand content is viewed.

### BACKGROUND

Digital media is often delivered to a user device by way of a broadcast stream. For typical television broadcast streams, a transport stream is provided, for example an MPEG-2 transport stream. In order for the receiving device to display a channel of the transport stream, a service description table (SDT) is provided with the broadcast stream that describes the available channels and how the receiving device can tune to each of those channels within the transport stream.

If a user desires to view on demand content, the on demand content is often provided over the top (OTT). That is, on demand content is provided by an on demand source not over a dedicated broadcast channel associated with the on demand source but over the top of a different communication channel, for example over the internet rather than by a traditional broadcast service. It will be appreciated that while the present disclosure is cast in terms of on demand content provided OTT by an on demand source, this is for ease of exposition and the disclosure equally applies to OTT sources in general, for example providing scheduled or linear content OTT.

The OTT source, not being a broadcast source, does not contain an SDT that references the channels available on a broadcast transport stream or plurality of transport streams received from the broadcast source.

As a result, when viewing OTT content, information pertaining to the channel line-up that is available from the broadcast source on one or more broadcast transport streams is lost such that the display device does not know which channels are being transmitted on the one or more broadcast transport streams. Hence, when the user decides to stop the OTT on demand source and to return to viewing a channel received from the broadcast source by way of a broadcast transport stream, a full scan of available services is required in order to re-sample the SDT of the broadcast transport stream.

Such a scan takes time which manifests itself in a delay in obtaining reception of a broadcast channel of the transport stream. This delay is an inconvenience for the user.

Non-patent literature XP017846455 discloses the multiplexing of transport streams, whereby the service description table (SDT) is comprised within the multiplex stream. EP 1 337 112 A1 discloses remultiplexing of DVB-T and DVB-S streams and maintaining the DVB-S SDT. EP 2 665 282 A1 discloses receiving a multiplexed transport stream from broadcast and IP sources. EP 2 442 582 A1 adds broadcast service information to the Service Discovery and Selection (SD&S) XML information of an IPTV data stream.

### SUMMARY

According to a first aspect there is disclosed a method comprising the steps of acquiring a first transport stream, acquiring a service description table of the first transport stream, acquiring a transport stream of an over the top source; and inserting the service description table of the first transport stream into the transport stream of the over the top source.

Inserting the SDT in the OTT transport stream avoids the need for a re-scan to obtain SDT information when the user stops watching OTT content and the transport stream of the OTT source is exited from. Hence a perceivable gap in reception when switching from the OTT source can be avoided.

The method may further comprise acquiring the over the top source and then replacing the over the top source with the first transport stream without re-acquiring the service description table of the first transport stream.

The service description table may comprise the service description table actual of the first transport stream and may further comprise the service description table others of the first transport stream. The method may further comprise inserting the service description table others of a transport stream other than the first transport stream in the OTT transport stream. The service description table others of the other transport steam may be provided by a server or other non-broadcast source, or by a broadcast source. With the provision of SDT-others, information as to other transport streams is available so that a re-scan is not required no matter which transport stream is switched to after the on-demand source is exited from.

The first transport stream may comprise a full broadcast transport stream.

The method may further comprise updating the continuity counter of the OTT transport stream subsequent to the inserting step. This ensures that a transport stream compliant to a transmission standard such as DVB and in particular MPEG-2 is provided. The method further comprising flagging service description table packets of the over the top source as stuffing packets, optionally, prior to the inserting step. Marking the service description table of the over the top source as stuffing packets negates the need to discard or strip them from the OTT stream (as they are ignored when the transport stream is parsed) which would be a costly exercise in terms of processing power and related resources.

The method may comprise inserting the service description table of the first transport stream into the transport steam of the over the top source in a position after the flagged packets. If the number of bytes of the service description table to be inserted is more than 183, the inserted service description table may be split between two or more transport stream packets of the transport stream of the over the top source. If more than two over the top transport stream packets are required to contain the inserted service description table, the presentation timestamp and decoding timestamp of the over the top stream may be recalculated.

The inserting step may be executed after the first transport stream and the over the top transport have been descrambled.t The transport stream of the over the top source comprises a video on demand stream.The transport streams may comprise MPEG compliant streams.

According to a second aspect there are disclosed one or more computer readable media comprising instructions that when executed by a processor, cause the processor to carry out any of the methods disclosed herein. There is further disclosed a processor comprising instructions that when executed, cause the processor to carry out any of the methods disclosed herein and a device capable of decoding a transport stream the device comprising the processor.

### BRIEF DESCRIPTION OF THE DRAWINGS

Embodiments will now be described, by way of example only, and with reference to the drawings in which:
Figure 1 illustrates a host and module according to an embodiment; and
Figure 2 illustrates further details of the module; and

### DETAILED DESCRIPTION

Two techniques are described to achieve reduced, or zero, delay between leaving an OTT source and displaying a channel received from a broadcast source by way of a broadcast transport stream.
1. An SDT can be provided that maintains the information required by the viewing device. This SDT can be inserted into a transport stream received from the OTT source at the receiving device before or after descrambling the transport scream (in case of a scrambled OTT source) and before the transport stream is decoded by the viewing device. This results in maintenance of the channel line-up information within the transport stream.
2. The SDT is inserted in a manner that is transparent to a receiving device such that new hardware does not need to be deployed to legacy viewing devices. This way a receiving device can detect inserted SDT as it would for SDT present from the original transport stream source.

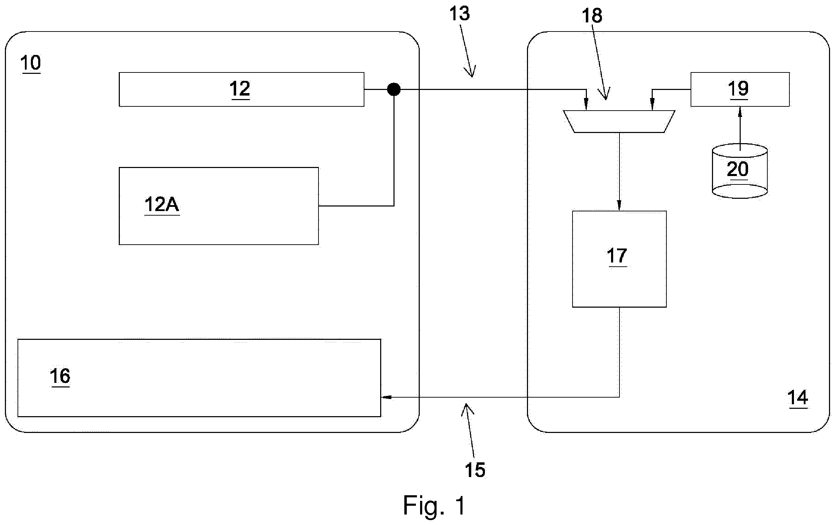

With reference to Figure 1, a receiving device 10, such as, but not limited to, a television or set-top box, comprises a tuner 12 capable of tuning to a transport stream 13 of a broadcast system. Such a broadcast system may be a terrestrial or satellite system, which may adhere to an MPEG standard and may be a full broadcast transport stream comprising a DVB compliant transport stream. Further, the receiving device 10 comprises a network adapter 12a for connecting the receiving device 10 to the internet. The receiving device 10 can, via the network adapter 12a, receive content OTT.

In order to tune to a particular channel of an acquired transport stream, the device 10 acquires a service description table either from a broadcast source or from another source, such as a server. In known systems, the SDT provides the channel ID required to enable the device 10 to tune to and display a desired channel of a particular transport stream.

Descrambling of the transport stream 13, for scrambled transport streams, is carried out by a module 14 such as a conditional access module (CAM). Module 14 may be part of receiving device 10 or may be a separate module. The separate module may be a separate hardware component connected (connectable) within the same housing as the receiving device 10 or may be provided in a separated housing connectable to a housing that houses the receiving device 10. Module 14 may comprise WIFI or other network connectivity, for example a network adapter, such that data can be acquired from non-broadcast sources such as a server or a cloud system.

Should content from an OTT source, for example an on-demand source be desired to be viewed, in response to a corresponding user input, the transport stream 13 is provided to the module 14 by the receiving device 10 from the network adapter 12a instead of the tuner 12.

After descrambling has occurred in module 14 (if required), a transport stream 15 (typically a single program transport stream, SPTS) which may be either a broadcast transport stream or an OTT transport stream depending on the source of the transport stream 13, is provided by the module 14 to the receiving device 10, specifically decoder 16, which then decodes the transport stream 15 in the usual manner as would be understood by a person skilled in the art, such that the content from the broadcast source or from the OTT, for example on-demand, source can be displayed.

As mentioned above, transport streams received OTT, for example from an on-demand source, do not typically contain the SDT that references the channels available in the transport stream that was previously being received by the receiving device 10 from a broadcast source via tuner 12. As a result, channel line-up information is not available to the receiving device just after OTT content has been viewed and hence a re-scan is required to capture up-to-date SDT information. This results in a delay which is obvious to the user when returning to a broadcast source from an on-demand source.

In order to alleviate the problem of needing to scan for the SDT and hence necessitating a delay in tuning when returning to a broadcast source from an on-demand source, the SDT of the broadcast source is inserted at an appropriate point into the transport stream 13 by module 14 in the case that the transport stream 13 comes from an OTT source via the network adapter 12a.

Turning to module 14 in more detail, an input selector 18 is provided which allows selection between allowing the incoming transport stream 13 through module 14 without SDT insertion, and enabling module 14 to insert an appropriate broadcast SDT by way of an SDT insertion component 17. Module 14 also comprises a processor 19 and associated memory 20 for preparation of an SDT for insertion. Processor 19 may be an FPGA, PLD or other programmable embedded processor. The processing power of the processor need only have a low-end capability such as, for example 100MIPS. Memory 20 may comprise RAM. Module 14 can also receive a cryptographic key in order to descramble on-demand and broadcast content as would be understood by a person skilled in the art.

Module 14 is able to monitor the SDT of the broadcast (linear) channels that are receivable by the associated receiver device 10. Module 14 may carry out the monitoring by way of receiving SDT directly from a broadcast source, such as from receiving device 10 as would be understood by a person skilled in the art, or from non-broadcast source such as a server or cloud system. Module 14 may comprise WIFI or other communication means in order to receive and have access to non-broadcast sources of appropriate SDTs. Module 14 may receive one or both of SDT-actual and SDT-other in relation to the transport stream currently being passed from the receiver device. SDT-actual comprises the service description table of the transport stream within which the SDT-actual is provided. SDT-other comprises the service description table of a transport stream other than the transport stream within which the SDT-other is provided. Module 14 stores the received SDT in memory 20.

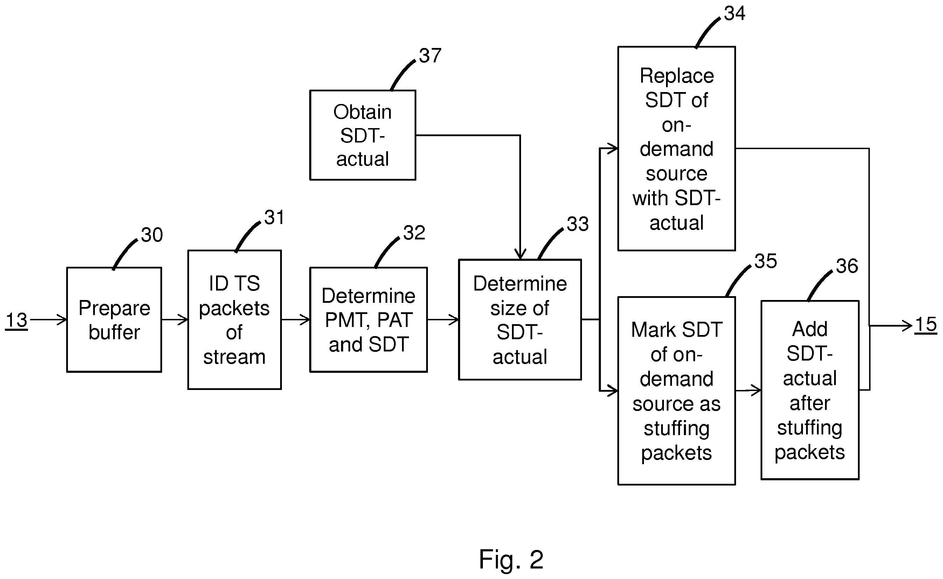

With reference to Figure 2, SDT insertion into an OTT stream by module 14 is now described. As would be understood, a transport stream 13 is acquired and passed to module 14 by receiving device 10. The transport stream may comprise TS packets that have a known structure, for example a 188-byte structure of an MPEG-2 transport stream. At step 30, a buffer is optionally prepared locally in module 14, for example in RAM 20. The buffer is provided to cater for differing numbers of packets being injected into an OTT transport stream with minimal disruption to the normal course of decoding of the OTT stream (see below). TS packets of the received stream 13 are identified at step 31. As illustrated in Figure 1, the transport stream 13 is typically received by the module 14 from the receiving device 10. However, transport streams may be received by the module 14 directly as described above, for example for SDT extraction from a transport stream received from a broadcast source in addition to receiving the transport stream 13 from the receiving device 10. Alternatively or additionally, the transport stream 13 to be processed is received by other means, for example from a server in some embodiments. At step 32, the program map tables (PMT), program association table (PAT) and SDT packets of the incoming transport stream 13 are determined by their packet identifier (PID). The determining of step 32 need only take place when a new stream 13 is tuned to or a stream of an OTT source is switched to. If the incoming stream 13 is an OTT transport stream, for example from an on-demand source, the PMT, PAT and SDT packets of the OTT transport stream 13 will not relate to the previously received broadcast source.

Meanwhile, subsequently or in parallel, at step 37, module 14 is provided with SDT-actual of the broadcast transport stream that was being viewed or processed and hence received by module 14 before a user indicated that viewing of an OTT source is desired. This may be provided by way of a separate receiver, a server or other non-broadcast source or by receiving device 10. An SDT-other may also be provided. The SDTs may be provided constantly, at a set frequency or upon demand by the module 14.

At step 33, the size of the SDT-actual (and if available the SDT-other) provided at step 37 is determined. If the number of bytes of SDT-actual fits into one TS packet of the OTT source, at step 34 the SDT-actual replaces the SDT packet of the transport stream from the OTT, for example on-demand, source. The continuity counter is updated accordingly. The updated SDT-actual is available for use by the receiving device 10 when it decodes the OTT stream 15 in the usual manner.

If the number of bytes of SDT from the broadcast channel is more than one TS packet of the OTT source (for example if the broadcast SDT comprises SDT-actual and SDT-other), the TS containing the SDT data of the stream of the OTT source are marked as stuffing packets (PID 0x1FFF) at step 35. When marked as stuffing, packets are ignored by a receiver such as receiving device 10. TS packets containing the broadcast SDT-actual and SDT-other are added after the stuffing packets at step 36 so that they are visible to receiving device 10 when it decodes the OTT stream and so as to keep the SDT repetition rate of the stream of the OTT source DVB compliant. The continuity counter is updated accordingly to take into account the number of packets marked as stuffing and the number of SDT-actual and optional SDT-other added into the OTT stream to ensure that a transport stream compliant with the relevant transmission standard such as DVB is provided.

At step 33, if the size is determined to be less than or equal to 183 bytes, the SDT-actual and SDT-other if available can be copied straight into the corresponding packets of the OTT stream. If the size is more than 183 bytes, then the SDT-actual and SDT-other packets can be split across TS packets.

As has been described above, input transport stream 13 (when received from an OTT source, for example via network adapter 12a, has had an SDT of a previously received transport stream inserted at an appropriate position in the transport stream and is provided to receiving device 10 for decoding in the form of transport stream 15. In this way, the appropriate SDT remains available to the receiving device 10 while content from an OTT source is viewed.

Any reference to module 14 carrying out a task may comprise processor 19 carrying out that task.

With the above mechanism, SDT-actual and SDT-other of a broadcast source (transport stream) that was being received by the receiving device 10 just before the OTT, for example on-demand, stream was selected for viewing can be utilised to replace the SDT of the OTT stream such that when the OTT stream is stopped, the user may remain on the previous broadcast transport stream by way of inserted SDT-actual or switch to another broadcast transport stream by way of SDT-other (for example by moving up 100 channels in the channel list), because the receiving device 10 still has access to a relevant SDT without performing a re-scan.

Such a method as described herein does not impact the program clock reference (PCR) clock recovery by the receiving device 10 nor the presentation timestamp (PTS) and decoding timestamp (DTS). By adding a small number of TS packets, the insertion time of the transport stream PCR value is not changed. For example, if just two TS packets are added to the OTT stream, the DTS and PTS do not need to be recalculated and further, the position of the packets carrying DTS and PTS does not need to be modified which complies with expectations of known receiving devices. If more than two packets are required to contain the inserted service description table(s), the presentation timestamp and decoding timestamp are recalculated.

As mentioned previously, an SDT can be split across TS packets in order to inject all of the SDT into the OTT stream.

Further, the marking of previous SDT packets as stuffing packets (just changing their PID, not the data payload) negates the need to discard or strip them from the OTT stream which would be costly in terms of processing power and related resources. As OTT streams do not normally contain stuffing packets to save bandwidth, the newly marked stuffing packets can be used as a trigger so that the SDT-actual and optional SDT-other from the previously received broadcast stream are placed after the newly marked stuffing packets in the OTT stream.

## Claims

1. A method comprising the steps of:
acquiring a first transport stream (13);
acquiring a service description table of the first transport stream;
acquiring a second transport stream (13) of an over the top source (12A);
inserting a service description table (17) of the first transport stream into the second transport stream of the over the top source to form a third transport stream (15); and
providing the third transport stream (15) to a transport stream decoder (16),
**characterized in that** the third transport stream is a single programme transport stream.

2. The method of claim 1 further comprising switching from providing the third transport stream to the transport stream decoder to providing the first transport stream to the transport decoder without re-acquiring the service description table of the first transport stream.

3. The method of claim 1 or 2 wherein the service description table comprises the service description table actual of the first transport stream.

4. The method of claim 3 wherein the method further comprises inserting the service description table other of the first transport stream in the second transport stream to form the third transport stream.

5. The method of any preceding claim where the method further comprises inserting the service description table other of a transport stream different to the first transport stream in the second transport stream to form the third transport stream.

6. The method of claim 5 wherein the service description table other of the different transport stream is received from a server or other non-broadcast source.

7. The method of any preceding claim further comprising flagging service description table packets of the second stream as stuffing packets.

8. The method of claim 7 wherein the service description table of the first transport stream is inserted into the second transport steam of the over the top source in a position after the flagged packets.

9. The method of any preceding claim wherein the transport streams comprise MPEG-2 compliant streams.

10. One or more tangible computer readable media encoding instructions that, when executed by a processor, cause the processor to carry out the method of any preceding claim.

11. A device comprising a processor arranged to perform instructions that when executed, cause the processor to carry out the method of any of claims 1 to 9.

12. The device of claim 11 further comprising a network adaptor for acquiring the service description table of the first transport stream.

13. The device of claim 11 or 12 wherein the device comprises a conditional access module.

14. The device of claim 12, wherein the conditional access module is configured to acquire the first and second transport streams from a receiving device to which the conditional access module is connected and to provide the third stream to the receiving device.

15. The device of any of claims 11 to 14 wherein the device is configured as a separate module connectable to a receiving device, wherein the module is configured to acquire the first and second transport streams from the receiving device and to provide the third stream to the receiving device.

## Patentansprüche

1. Verfahren, umfassend die folgenden Schritte:
Erfassen eines ersten Transportstroms (13);
Erfassen einer Service-Description-Tabelle des ersten Transportstroms;
Erfassen eines zweiten Transportstroms (13) einer Over-the-Top-Quelle (12A);
Einfügen einer Service-Description-Tabelle (17) des ersten Transportstroms in den zweiten Transportstrom der Over-the-Top-Quelle, um einen dritten Transportstrom (15) auszubilden; und
Bereitstellen des dritten Transportstroms (15) für einen Transportstromdecoder (16), **dadurch gekennzeichnet, dass** der dritte Transportstrom ein Einzelprogrammtransportstrom ist.

2. Verfahren nach Anspruch 1, ferner umfassend ein Wechseln von dem Bereitstellen des dritten Transportstroms für den Transportstromdecoder zu einem Bereitstellen des ersten Transportstroms für den Transportdecoder, ohne ein erneutes Erfassen der Service-Description-Tabelle des ersten Transportstroms.

3. Verfahren nach Anspruch 1 oder 2, wobei die Service-Description-Tabelle die tatsächliche Service-Description-Tabelle des ersten Transportstroms umfasst.

4. Verfahren nach Anspruch 3, wobei das Verfahren ferner ein Einfügen der anderen Service-Description-Tabelle des ersten Transportstroms in den zweiten Transportstrom umfasst, um den dritten Transportstrom auszubilden.

5. Verfahren nach einem der vorhergehenden Ansprüche, wobei das Verfahren ferner ein Einfügen der anderen Service-Description-Tabelle eines Transportstroms, der sich von dem ersten Transportstrom unterscheidet, in den zweiten Transportstrom umfasst, um den dritten Transportstrom auszubilden.

6. Verfahren nach Anspruch 5, wobei die andere Service-Description-Tabelle des unterschiedlichen Transportstroms von einem Server oder einer anderen Nicht-Rundfunkquelle empfangen wird.

7. Verfahren nach einem der vorhergehenden Ansprüche, ferner umfassend ein Kennzeichnen von Service-Description-Tabellendatenpaketen des zweiten Stroms als Stopfdatenpakete.

8. Verfahren nach Anspruch 7, wobei die Service-Description-Tabelle des ersten Transportstroms in den zweiten Transportstrom der Over-the-Top-Quelle an einer Position nach den gekennzeichneten Datenpaketen eingefügt wird.

9. Verfahren nach einem der vorhergehenden Ansprüche, wobei die Transportströme MPEG-2-konforme Ströme umfassen.

10. Eine oder mehrere greifbare computerlesbare Mediencodierungsanweisungen, die, wenn sie durch einen Prozessor ausgeführt werden, den Prozessor veranlassen, das Verfahren nach einem der vorhergehenden Ansprüche durchzuführen.

11. Vorrichtung, umfassend einen Prozessor, der angeordnet ist, um Anweisungen zu erfüllen, die, wenn sie ausgeführt werden, den Prozessor veranlassen, das Verfahren nach einem der Ansprüche 1 bis 9 durchzuführen.

12. Vorrichtung nach Anspruch 11, ferner umfassend einen Netzwerkadapter zum Erfassen der Service-Description-Tabelle des ersten Transportstroms.

13. Vorrichtung nach Anspruch 11 oder 12, wobei die Vorrichtung ein Modul für bedingten Zugriff umfasst.

14. Vorrichtung nach Anspruch 12, wobei das Modul für bedingten Zugriff konfiguriert ist, um den ersten und den zweiten Transportstrom von einer Empfangsvorrichtung zu erfassen, mit der das Modul für bedingten Zugriff verbunden ist, und den dritten Strom für die Empfangsvorrichtung bereitzustellen.

15. Vorrichtung nach einem der Ansprüche 11 bis 14, wobei die Vorrichtung als ein separates Modul konfiguriert ist, das mit einer Empfangsvorrichtung verbunden werden kann, wobei das Modul konfiguriert ist, um den ersten und den zweiten Transportstrom von der Empfangsvorrichtung zu erfassen und den dritten Strom für die Empfangsvorrichtung bereitzustellen.

## Revendications

1. Procédé comprenant les étapes consistant à :
acquérir un premier flux de transport (13) ;
acquérir une table de description de service du premier flux de transport ;
acquérir un deuxième flux de transport (13) d'une source hors offre du fournisseur d'accès à l'internet (12A) ;
insérer une table de description de service (17) du premier flux de transport dans le deuxième flux de transport de la source hors offre du fournisseur d'accès à l'internet pour former un troisième flux de transport (15) ; et
fournir le troisième flux de transport (15) à un décodeur de flux de transport (16), **caractérisé en ce que** le troisième flux de transport est un flux de transport de programme unique.

2. Procédé selon la revendication 1, comprenant en outre le fait de passer de la fourniture du troisième flux de transport au décodeur de flux de transport à la fourniture du premier flux de transport au décodeur de transport, sans réacquérir la table de description de service du premier flux de transport.

3. Procédé selon la revendication 1 ou 2, dans lequel la table de description de service comprend la table de description de service réelle du premier flux de transport.

4. Procédé selon la revendication 3, dans lequel le procédé comprend en outre l'insertion de la table de description de service autre du premier flux de transport dans le deuxième flux de transport pour former le troisième flux de transport.

5. Procédé selon l'une quelconque des revendications précédentes, dans lequel le procédé comprend en outre l'insertion de la table de description de service autre d'un flux de transport différent du premier flux de transport dans le deuxième flux de transport pour former le troisième flux de transport.

6. Procédé selon la revendication 5, dans lequel la table de description de service autre du flux de transport différent est reçue d'un serveur ou d'une autre source de non diffusion.

7. Procédé selon l'une quelconque des revendications précédentes, comprenant en outre le marquage des paquets de table de description de service du deuxième flux en tant que paquets de bourrage.

8. Procédé selon la revendication 7, dans lequel la table de description de service du premier flux de transport est insérée dans le second flux de transport de la source hors offre du fournisseur d'accès à l'internet dans une position après les paquets marqués.

9. Procédé selon l'une quelconque des revendications précédentes, dans lequel les flux de transport comprennent des flux compatibles avec la MPEG-2.

10. Plusieurs instructions de codage de support tangible lisibles par ordinateur qui, lorsqu'elles sont exécutées par un processeur, amènent le processeur à effectuer le procédé de l'une quelconque des revendications précédentes.

11. Dispositif comprenant un processeur agencé pour réaliser des instructions qui, lorsqu'elles sont exécutées, amènent le processeur à effectuer le procédé selon l'une quelconque des revendications 1 à 9.

12. Dispositif selon la revendication 11, comprenant en outre un adaptateur de réseau pour acquérir la table de description de service du premier flux de transport.

13. Dispositif selon la revendication 11 ou 12, dans lequel le dispositif comprend un module d'accès conditionnel.

14. Dispositif selon la revendication 12, dans lequel le module d'accès conditionnel est configuré pour acquérir les premier et deuxième flux de transport d'un dispositif récepteur auquel le module d'accès conditionnel est connecté et pour fournir le troisième flux au dispositif récepteur.

15. Dispositif selon l'une quelconque des revendications 11 à 14, dans lequel le dispositif est configuré en tant que module séparé pouvant être connecté à un dispositif récepteur, dans lequel le module est configuré pour acquérir les premier et deuxième flux de transport du dispositif récepteur et pour fournir le troisième flux au dispositif récepteur.
